# EUROPÄISCHE PATENTSCHRIFT

(11) **EP 1 000 267 B1**
(45) Veröffentlichungstag und Bekanntmachung des Hinweises auf die Patenterteilung: **09.05.2001**
(21) Anmeldenummer: 98943786.8
(22) Anmeldetag: 25.07.1998
(51) Int. Cl.: F16D 23/06

(54) **SCHALTKUPPLUNG**
CLUTCH
EMBRAYAGE

(30) Priorität: 02.08.1997 DE 19733518
(43) Veröffentlichungstag der Anmeldung: 17.05.2000
(73) Patentinhaber: ZF FRIEDRICHSHAFEN Aktiengesellschaft, 88038 Friedrichshafen (DE)
(72) Erfinder: BURI, Gerhard, D-88677 Markdorf (DE)
(86) Internationale Anmeldenummer: EP9804676
(87) Internationale Veröffentlichungsnummer: WO9906727

(56) Entgegenhaltungen:
- EP-A- 0 423 863
- EP-A- 0 663 541

## Beschreibung

Die Erfindung betrifft eine Schaltkupplung mit den Merkmalen nach dem Oberbegriff von Anspruch 1. Eine derartige Kupplung ist z.B. aus EP-A-0 663 541 bekannt.

In Schaltgetrieben, die unter Zugkraftunterbrechung geschaltet werden, d. h., daß eine Eingangswelle während des Schaltvorgangs durch eine Kupplung von einer Antriebsmaschine getrennt wird, kann man den jeweiligen Gang mit einer Schaltkupplung der eingangs beschriebenen Art einlegen, indem eine Schaltverzahnung einer Schiebemuffe in eine Kuppelverzahnung eines Kupplungskörpers geschoben wird, der an einem zu kuppelnden Getriebeelement befestigt ist, z. B. an einem Zahnrad oder Getriebegehäuse. Dabei wird das Drehmoment im geschalteten Zustand von einem Getriebeelement über den Kupplungskörper, die Kuppelverzahnung, die Schaltverzahnung, die Schiebemuffe und die Muffenführung auf ein anderes Getriebeelement, z. B. ein Zahnrad oder eine Welle, übertragen oder am Getriebegehäuse abgestützt. Der geschaltete Gang bestimmt das Übersetzungsverhältnis und damit das Drehzahlverhältnis zwischen der Eingangswelle und einer Ausgangswelle des Getriebes. Die nicht gekuppelten Getriebeelemente, z. B. frei umlaufende, ständig im Eingriff befindliche Zahnräder, der übrigen Gänge laufen mit einer ihrer Übersetzung entsprechenden Differenzdrehzahl zu den geschalteten Getriebeelementen. Wird von einem Gang zu einem anderen gewechselt, müssen die zu kuppelnden Teile während des Schaltens auf eine annähernd gleiche Drehzahl gebracht werden, bevor die Schaltverzahnung der Schiebemuffe in die Kuppelverzahnung des zu schaltenden Kupplungskörpers eingreifen kann.

Hierzu dient eine Synchronisiereinrichtung. Sie besteht im wesentlichen aus Reibflächen, z. B. einem Reibkonus, am Kupplungskörper und Reibflächen, z. B. einem Gegenkonus, an einem Synchronisierring, der zudem eine Sperrverzahnung aufweist. Der Synchronisierring läuft mit der Schiebemuffe um, kann sich jedoch zwischen zwei Anschlägen gegenüber dieser um einen begrenzten Drehwinkel drehen, damit eine Sperrvorrichtung, z. B. eine Sperrverzahnung am Synchronisierring, in Sperrstellung gebracht wird.

Bewegt man die Muffe in Richtung des zu schaltenden Kupplungskörpers, wird der Synchronisierring mit seinem Gegenkonus über nachgebende Rastmittel gegen den Reibkonus des Kupplungskörpers gedrückt. Dabei verdreht sich der Synchronisierring relativ zur Muffe, so daß stirnseitige Schrägflächen der Schaltverzahnung auf entsprechende Sperrflächen der Sperrverzahnung stoßen. Dadurch wird eine Axialkraft auf den Synchronisierring und die Reibflächen ausgeübt. Die Schaltkraft erzeugt gleichzeitig über die Schrägflächen eine Rückstellkraft auf den Synchronisierring. Diese überwiegt bei Gleichlauf der Teile die an den Reibflächen wirkende Umfangskraft und bringt den Synchronisierring in eine Mittelstellung, bei der die Muffe durchgeschaltet werden kann.

Solche Schaltkupplungen sind bekannt, und zwar für Schaltgetriebe in Planetenbauweise durch die DE 34 445 62 A1 und für Schaltgetriebe in Vorgelegebauweise durch die DE 34 446 70 A1.

Bei Schaltkupplungen, bei denen aus einem geschalteten Zustand über eine Neutralstellung in eine weitere Schaltstellung geschaltet wird, kann es unter bestimmten Betriebsbedingungen vorkommen, daß beim Schaltvorgang die Schiebemuffe den nicht oder ungenügend in Sperrstellung verdrehten Synchronring fast ungehindert passiert und dadurch die Schaltverzahnung die Kuppelverzahnung tangiert, was unangenehme Geräusche und Verschleiß verursacht.

Der Erfindung liegt die Aufgabe zugrunde, die Geräusche und den Verschleiß zu vermeiden. Sie wird mit den Merkmalen von Anspruch 1 gelöst.

Nach der Erfindung sind die Synchronringe miteinander gekoppelt, so daß sich im geschalteten Zustand der einen Seite der Schaltkupplung die Sperrverzahnung des Synchronrings auf der nicht geschalteten Seite zwangsläufig in Sperrstellung befindet. Dadurch kann die Schiebemuffe von der einen Schaltposition nicht ungehindert in die andere Schaltposition verschoben werden, ohne auf die Sperrverzahnung des entsprechenden Synchronrings zu treffen.

In einer Ausgestaltung der Erfindung wird vorgeschlagen, daß die Synchronringe an den zugewandten Stirnseiten ineinander greifende Formschlußelemente aufweisen, zweckmäßigerweise in Form von Nocken, die an axial erstreckenden Flanken aneinander anliegen. Die Nocken können zwischen zwei Anschlägen in der Schiebemuffe oder in der Muffenführung geführt und um einen begrenzten Drehwinkel zur Schiebemuffe verdrehbar sein.

Dabei kann besonders vorteilhaft sein, daß der Verdrehweg so ausgelegt ist, daß ein Synchronring nur in eine Richtung in eine Sperrstellung verdreht werden kann.

Da die Koppelglieder mechanisch fest mit den Synchronringen verbunden sind, entsteht kein Prellen oder Verspannen der Synchronisiereinrichtung, wie dies z. B. bei Federelementen der Fall ist.

In der Zeichnung ist ein Ausführungsbeispiel der Erfindung dargestellt.
Es zeigen:
- Fig. 1: einen teilweisen Längsschnitt durch eine erfindungsgemäße Schaltkupplung und
- Fig. 2: eine teilweise Abwicklung eines Zylinderschnitts entsprechend der Linie II-II in Fig. 1.

Eine Schaltkupplung 1 dient zum Schalten einer Planetenstufe 2, die ein Hohlrad 3, Planetenräder 4 und ein Sonnenrad 7 umfaßt. Die Planetenräder 4 sind auf Planetenbolzen 5 mittels Wälzlagern 6 in einem Planetenträger 8 gelagert. Das Sonnenrad 7 ist mit einer nicht näher dargestellten Eingangswelle verbunden und der Planetenträger 8, der mittels eines Wälzlagers 10 in einem Getriebegehäuse 9 gelagert ist, mit einer nicht näher dargestellten Ausgangswelle.

Die Schaltkupplung 1 besitzt eine Schiebemuffe 17 mit einer Nut 18 für eine nicht näher dargestellte Schaltgabel. Ferner hat sie eine Schaltverzahnung 19. Im gezeichneten Zustand greift die Schaltverzahnung 19 durch eine Sperrverzahnung 31 eines Synchronisierrings 29 in eine Kuppelverzahnung 23 eines Kupplungskörpers 21 ein.

Die Schiebemuffe 17 ist über eine Mitnahmeverzahnung 11 mit dem Hohlrad 3 drehfest verbunden, das gleichzeitig zur Führung der Schiebemuffe 17 dient. Axial ist die Schiebemuffe 17 im Hohlrad 3 durch einen Sicherungsring 15 gesichert. Der Kupplungskörper 21 ist über eine Mitnahmeverzahnung 13 und einen Sicherungsring 16 in einem Getriebegehäuse 9 fixiert. Somit ist in dem gezeichneten Schaltzustand das Hohlrad 3 über die Schiebemuffe 17 und den Kupplungskörper 21 mit dem Getriebegehäuse 9 verbunden.

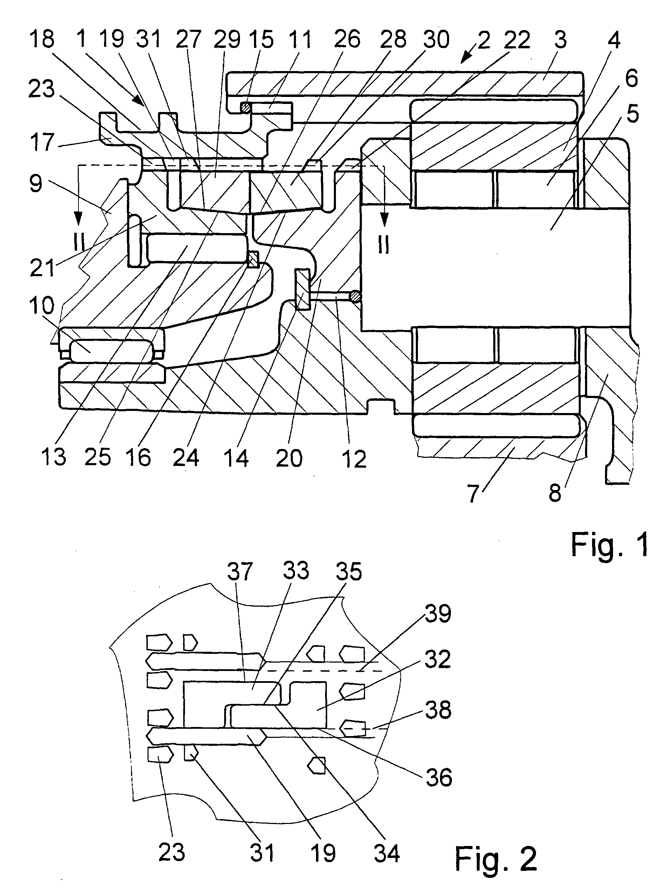

Zur Schaltkupplung 1 gehört ferner ein weiterer Kupplungskörper 20 mit einer Kuppelverzahnung 22, der über eine Mitnahmeverzahnung 12 und einen Sicherungsring 14 an dem Planetenträger 8 fixiert ist und mit einem Synchronisierring 28 zusammenarbeitet. Wird die Schiebemuffe 17 entsprechend der Fig. 1 nach rechts verschoben, wird in einen anderen Gang bzw. Getriebegruppe gewechselt, bei der das Hohlrad 3 mit dem Planetenträger 8 verbunden ist und mit diesem gemeinsam umläuft.

Die Synchronisierringe 28, 29 haben mehrere, über den Umfang verteilte Nocken 32, 33, die sich jeweils mit einer sich axial erstreckenden Flanke 34 an einer entsprechenden Flanke 35 anderer Nocken 32 abstützen (Fig. 2), die zu dem Synchronisierring 28 gehören. Äußere Flanken 36, 37 der Nocken 32 bzw. 33 ermöglichen zwischen Anschlägen 38, 39 einen begrenzten Verdrehwinkel. Über die Nocken 32, 33 sind die Synchronisierringe 28, 29 so miteinander gekoppelt, daß der eine Synchronisierring 29 den anderen Synchronisierring 28 mit seiner Sperrverzahnung 30 in eine Sperrstellung verdreht, sobald er den Durchgang für die Schaltverzahnung 19 frei gibt und umgekehrt.

Wird nun die Schiebemuffe 17 aus der geschalteten Position (Fig. 1) nach rechts verschoben, so trifft ihre Schaltverzahnung 19 auf die Sperrverzahnung 30 des Synchronisierrings 28. Dadurch wird der Synchronisierring 28 mit seinem Reibkonus 24 gegen einen Gegenkonus 26 gedrückt. Durch die stirnseitige Anschrägung der Schaltverzahnung 19 und der Sperrverzahnung 30 (Fig. 2) entsteht eine Kraftkomponente in Umfangsrichtung, die den Synchronisierring 28 samt Sperrverzahnung 30 aus der Sperrstellung verdreht, sobald Gleichlauf zwischen der Schiebemuffe 17 und dem Kupplungskörper 20 erreicht ist. Bei Gleichlauf kann nun die Schaltverzahnung 19 in die Kuppelverzahnung 22 des Kupplungskörpers 20 eingreifen, wodurch nunmehr das Hohlrad 3 mit dem Planetenträger 8 gekuppelt ist. Gleichzeitig verstellt der Nocken 32 des Synchronisierrings 28 den Nokken 33 mit dem Synchronisierring 29 und seiner Sperrverzahnung 31 in die Sperrstellung, so daß beim Zurückschalten in die gezeichnete Schaltposition die Sperrverzahnung 31, ein Reibkonus 25 an dem Synchronisierring 29 und ein Gegenkonus 27 an dem Kupplungskörper 21 wirksam werden.

Das Ausführungsbeispiel zeigt eine Schaltkupplung 1 für eine Planetenstufe 2, jedoch ist die Erfindung auch für Getriebe in Vorgelegebauweise geeignet. In diesem Falle wird die Schiebemuffe 17 auf einer Muffenführung drehfest geführt, die mit einer Welle verbunden ist. Die Nocken 32, 33 werden dann zweckmäßigerweise durch Durchbrüche in der Muffenführung greifen, die gleichzeitig als Drehbegrenzung dienen können.

### Bezugszeichen

- 1: Schaltkupplung
- 2: Planetenstufe
- 3: Hohlrad
- 4: Planetenrad
- 5: Planetenbolzen
- 6: Wälzlager
- 7: Sonnenrad
- 8: Planetenträger
- 9: Getriebegehäuse
- 10: Wälzlager
- 11: Mitnahmeverzahnung
- 12: Mitnahmeverzahnung
- 13: Mitnahmeverzahnung
- 14: Sicherungsring
- 15: Sicherungsring
- 16: Sicherungsring
- 17: Schiebemuffe
- 18: Nut
- 19: Schaltverzahnung
- 20: Kupplungskörper
- 21: Kupplungskörper
- 22: Kuppelverzahnung
- 23: Kuppelverzahnung
- 24: Reibkonus
- 25: Reibkonus
- 26: Gegenkonus
- 27: Gegenkonus
- 28: Synchronisierring
- 29: Synchronisierring
- 30: Sperrverzahnung
- 31: Sperrverzahnung
- 32: Nocken
- 33: Nocken
- 34: Flanke
- 35: Flanke
- 36: Flanke
- 37: Flanke
- 38: Anschlag
- 39: Anschlag

## Patentansprüche

1. Schaltkupplung (1), die aus einer Schiebemuffe (17) mit einer Schaltverzahnung (19), aus zwei zu beiden Seiten der Schiebemuffe (17) angeordneten Synchronisierringen (28, 29) mit einer Sperrverzahnung (30, 31) und Reibfläche (24, 25), die um einen begrenzten Drehwinkel zur Schaltmuffe (17) verdrehbar sind, und aus zwei mit den Synchronisierringen (28, 29) zusammenarbeitenden Kupplungskörpern (20, 21) mit einer Kuppelverzahnung (22, 23) und Gegenreibfläche (26, 27) aufgebaut ist, wobei die Schiebemuffe (17) stets über eine Muffenführung (3) drehfest mit einem Getriebeelement (3) und im geschalteten Zustand über die Schaltverzahnung (19) und die Kuppelverzahnung (22, 23) formschlüssig mit einem der Kupplungskörper (20, 21) verbunden ist, dadurch **gekennzeichnet**, daß die Synchronisierringe (28, 29) so miteinander gekoppelt sind, daß sich im geschalteten Zustand auf der einen Seite die Sperrverzahnung (30) des Synchronisierrings (28) auf der nicht geschalteten Seite in Sperrposition befindet.

2. Schaltkupplung (1) nach Anspruch 1, dadurch **gekennzeichnet,** daß die Synchronisierringe (28, 29) an den zugewandten Stirnseiten ineinandergreifende Formschlußelemente (32, 33) aufweisen.

3. Schaltkupplung (1) nach Anspruch 2, dadurch **gekennzeichnet,** daß die Formschlußelemente Nokken (32, 33) sind, die mit axial erstreckenden Flanken (34, 35) aneinander anliegen.

4. Schaltkupplung (1) nach Anspruch 3, dadurch **gekennzeichnet,** daß die Nocken (32, 33) mit einem Anschlag (38, 39) in der Schiebemuffe (17) oder einer Muffenführung eine Drehwinkelbegrenzung bilden.

5. Schaltkupplung (1) nach Anspruch 4, dadurch **gekennzeichnet,** daß die Nocken (32, 33) sich in einem Bereich radial in eine Nut der Schiebemuffe (17) erstrecken.

6. Schaltkupplung (1) nach einem der vorherigen Ansprüche, dadurch **gekennzeichnet**, daß zur Erreichung der Sperrposition der Synchronring (28, 29) nur in einer Richtung verdreht werden kann.

## Claims

1. Clutch (1) consisting of a sliding sleeve (17) with engaging teeth (19), of two synchronizing rings (28, 29) disposed on both sides of the sliding sleeve (17) and having locking teeth (30, 31) and a friction surface (24, 25), which rings can be turned relative to the sliding sleeve (17) about a limited rotational angle, and of two clutch bodies (20, 21) which co-operate with the synchronizing rings (28, 29) and have coupling teeth (22, 23) and a counter friction surface (26, 27), wherein the sliding sleeve (17) is constantly non-rotatably connected via a sleeve guide (3) to a gear element (3) and, in the engaged state, positively connected via the engaging teeth (19) and the coupling teeth (22, 23) to one of the clutch bodies (20, 21), characterised in that the synchronizing rings (28, 29) are coupled to one another such that when engaged on one side the locking teeth (30) of the synchronizing ring (28) are in the locking position on the non-engaged side.

2. Clutch (1) according to Claim 1, characterised in that the synchronizing rings (28, 29) comprise intermeshing positive-locking elements (32, 33) at the facing front sides.

3. Clutch (1) according to Claim 2, characterised in that the positive-locking elements are projections (32, 33) which bear against one another with axially extending flanks (34, 35).

4. Clutch (1) according to Claim 3, characterised in that the projections (32, 33) form a rotational angle limit with a stop (38, 39) in the sliding sleeve (17) or a sleeve guide.

5. Clutch (1) according to Claim 4, characterised in that the projections (32, 33) extend radially in one area into a groove of the sliding sleeve (17).

6. Clutch (1) according to any one of the preceding Claims, characterised in that the synchronizing ring (28, 29) can only be turned in one direction to reach the locking position.

## Revendications

1. Embrayage (1) composé d'un coulisseau (17) doté d'une denture de crabotage (19), de deux cônes de synchronisation (28, 29) disposés des deux côtés du coulisseau (17) dotés d'une denture de verrouillage (30, 31) et d'une surface de frottement (24, 25) ; les dits cônes de synchronisation étant orientables d'un angle de rotation limité par rapport au coulisseau (17) et composés de deux anneaux de crabotage (20, 21) coopérants avec les cônes de synchronisation (28, 29) lesquels sont dotés d'une denture d'accouplement (22, 23) et d'une contre-surface de frottement (26, 27), sachant que le coulisseau (17) est toujours lié, par l'intermédiaire d'un guide-manchon, de façon à être solidaire en rotation à un élément de la boîte de vitesses (3) et que, en l'état embrayé, le coulisseau est lié par l'intermédiaire de la denture de crabotage (19) et la denture d'accouplement (22, 23) à engagement positif à un des anneaux de crabotage (20, 21), **caractérisé** en ce que les cônes de synchronisation (28, 29) sont accouplés de façon à ce que, dans l'état embrayé, d'un côté la denture de verrouillage (30) du cône de synchronisation (28) se trouve, du côté pas engagé, en position de verrouillage.

2. Embrayage (1) selon la revendication 1, **caractérisé** en ce que les faces frontales des cônes de synchronisation (28, 29), qui sont tournées respectivement l'une contre l'autre, sont dotées d'éléments à engagement positif (32, 33) engrenant l'un avec l'autre.

3. Embrayage (1) selon la revendication 2, **caractérisé** en ce que les éléments à engagement positif sont des cames (32, 33), dont les flancs (34, 35), s'étendant dans le sens axial, sont adjacents.

4. Embrayage (1) selon la revendication 3, **caractérisé** en ce que les cames (32, 33) limitent, par une butée (38, 39) réalisée dans le coulisseau (17) ou par un guide-manchon, l'angle de rotation.

5. Embrayage (1) selon la revendication 4, **caractérisé** en ce que une partie des cames (32, 33) s'étend dans le sens radial jusque dans une cannelure du coulisseau (17).

6. Embrayage (1) selon une des revendications précédentes, **caractérisé** en ce que pour atteindre la position de verrouillage le cône de synchronisation (28, 29) ne peut être tourné que dans un seul sens.
